Europäisches Patentamt

European Patent Office

Office européen des brevets

(11) Publication number: **0 233 276 B1**

(12) **EUROPEAN PATENT SPECIFICATION**

(45) Date of publication of patent specification: **29.01.92**    (51) Int. Cl.⁵: **B65B 9/02**, B65B 51/14, B65B 23/00, B65B 23/22

(21) Application number: **86905548.3**

(22) Date of filing: **20.08.86**

(86) International application number: **PCT/US86/01731**

(87) International publication number: **WO 87/01092 (26.02.87 87/05)**

(54) **WRAPPING.**

(30) Priority: **21.08.85 US 768103**
        **09.09.85 US 774063**
        **04.10.85 US 783430**
        **13.06.86 US 873819**

(43) Date of publication of application:
    **26.08.87 Bulletin 87/35**

(45) Publication of the grant of the patent:
    **29.01.92 Bulletin 92/05**

(84) Designated Contracting States:
    **AT BE CH DE FR GB IT LI NL SE**

(56) References cited:
    WO-A-85/04150          US-A- 2 167 634
    US-A- 2 340 260        US-A- 2 752 221
    US-A- 2 759 872        US-A- 2 829 080
    US-A- 3 080 211        US-A- 3 411 263
    US-A- 3 735 551        US-A- 4 036 675
    US-A- 4 051 066        US-A- 4 074 505
    US-A- 4 086 384        US-A- 4 130 524
    US-A- 4 131 583        US-A- 4 253 892
    US-A- 4 263 360        US-A- 4 275 835
    US-A- 4 302 272        US-A- 4 321 297

    US-A- 4 379 008        US-A- 4 396 447
    US-A- 4 471 872        US-A- 4 584 225

(73) Proprietor: **THE CROWELL CORPORATION**
    **Crowell Road and Harding Avenue, P.O. Box 3227**
    **Newport, DE 19804-0227(US)**

(72) Inventor: **ADELMAN, Herbert, B.**
    **R.D. 2 Box 53A**
    **Hockessin, DE 19707(US)**
    Inventor: **RASZEWSKI, Lewis, R.**
    **108 Wicomico Road**
    **Stevensville, MD 21666(US)**
    Inventor: **HSU, Ten-hu**
    **2704 Tonbridge Drive**
    **Wilmington, DE 19810(US)**

(74) Representative: **Powell, Stephen David et al**
    **WILLIAMS, POWELL & ASSOCIATES 34 Tavistock Street**
    **London WC2E 7PB(GB)**

## Description

The present invention relates to materials suitable for use in wrapping and protecting articles.

Among the objects of the present invention is the provision of improved packaging materials.

According to the present invention there is provided natural rubber latex characterised in that there is dissolved therein alkali metal hydroxide in a concentration from about 1/4% to about 2% by weight, and a polyglycol solvent for the alkali metal hydroxide in a concentration of about 1/4% to about 5% by weight.

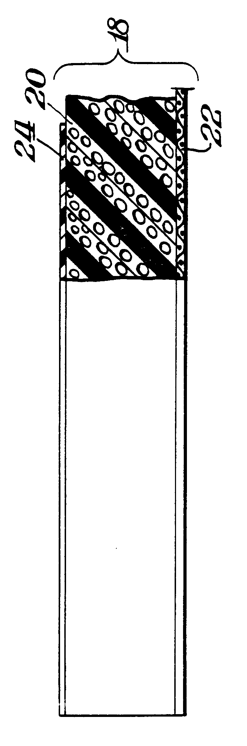

The foregoing, as well as still further objects of the present invention, will be more fully understood from the following description of several of its exemplifications, reference being made to the accompanying drawing which shows an enlarged side view of one embodiment of a wrapper of the present invention.

In one embodiment of the present invention particularly desirable supported foam wrapper laminates are cold-sealed, as described in U.S. Patent No. 4,086,384. Prior art volatile corrosion inhibitors, including those described in U.S. Patent No. 4,321,297, have an adverse effect on the cohesive-nonadhesive latexes generally used for cold-sealing, in that the cold-sealing effectiveness gradually diminishes and in a few weeks becomes unsuitable when the volatile corrosion inhibitor is mixed with the cold-sealing latex.

It has now been discovered that dicyclohexylamine and/or 2-amino-2-alkyl-propadiol-1,3 can be mixed with natural rubber latex to provide a combined cohesive-nonadhesive layer that contains VCI and has a shelf life of at least four months even at elevated temperatures. To this end the latex should be protected with a protective colloid like casein in a concentration from about 4% to about 10% by weight of the dry natural rubber in the latex.

An antioxidant such as 2,5-ditertiarybutyl hydroquinone or similar hindered phenol should also be used in a concentration of about 1/4% to about 1% by weight of the dry natural rubber content.

A cohesive-nonadhesive coating solution is prepared by taking 170 parts by weight of natural rubber latex having 60% non-volatiles by weight, and adding to it a cooked solution of 10 parts by weight casein, 1 part by weight KOH, and 1/2 part by weight of 2,5-ditertiarybutyl hydroquinone in 19 parts by weight of water. The addition is made slowly with very gentle stirring.

There is then prepared a VCI solution of four parts polyvinylpyrrolidone in 52 parts by weight of water, and to that VCI solution is added four parts by weight of 2-amino-2-ethyl-1,3-propadiol-1,3, followed by four parts by weight of dicyclohexylamine, with vigorous stirring. The resulting VCI solution is slowly added to the stabilized latex solution to make a coating composition having about 50% non-volatiles.

A roll coater is set up to apply at room temperature the 50% non-volatiles aqueous dispersion to the foam surface of a paper-foam laminate. There is fed to the coater a previously prepared laminate of 1.1/2-millimeter thick microcellular closed-cell polypropylene foam laminated to a support of 30-pound Kraft paper. The coating mixture is dried at about 60°C after it is applied to the laminate, to leave a dry coating weight of about 10 grams per square decimeter. The resulting product which also includes potassium hydroxide and a polyethylene glycol as described below, is illustrated in the Figure where 18 is the pre-prepared laminate of the foam layer 20 to the Kraft sheet 22, and 24 is the coating of VCI and cohesive-nonadhesive.

A wetting agent such as tetramethyl decynediol can be added to the coating composition if necessary to improve the wetting of the foam surface, as well as to reduce the tendency of the composition to foam during the coating operation. Only about 1/4% of such agent based on the dry weight of the natural rubber is adequate. Thickening agents such as hydroxyethyl cellulose or polyacrylic acid can also be added in such small amounts to improve the flow of the coating composition onto the foam surface. These agents also help stabilize the latex against breaking of the dispersion.

The coating composition can also be modified by the addition of resin dispersions or solutions that increase the aggressiveness of the cohesive function of the coated wrapper. A typical resin for such purpose is partially or fully hydrogenated wood rosin or partially or fully hydrogenated wood rosin esters, such as the Staybelite resins of Hercules, Inc., emulsified in water. Also synthetic isoprene, neoprene, butyl rubber or chloroprene latex can be substituted for some or all of the natural rubber latex.

Excellent corrosion protection is provided by the combination of the dicyclohexylamine and the 2-amino-2-ethyl-propadiol-1,3 inhibitors when in combined amounts of from about 0.3 to about 2 grams per square decimeter. Other lower-alkyl groups such as methyl, propyl and butyl can be used in place of the ethyl group at carbon numbered 2 of the propadiol molecule.

While equal proportions of the two inhibitors are preferred, the proportion of the dicyclohexylamine can be increased from about 50% by weight to about 95% by weight. It can also be increased to 100% by weight with only a small decrease in long-term corrosion prevention. The dicyclohexylamine is not very soluble in water and is preferably first dispersed in water with the help of a dispersing agent such as the polyvinylpyrrolidone, and the dispersion then slowly added to the latex. However, merely permitting the latex to stand in contact with the dicyclohexylamine for 24 hours or more will cause sufficient of the inhibitor to dissolve in the latex to provide significant corrosion inhibition. Other additives such as antioxidants can also be added by the foregoing techniques.

The amine diol is quite soluble in water and can be directly dissolved in the latex, but again is preferably first dissolved in water and that water solution slowly added to the latex.

The foregoing inhibitor-coated foam-paper laminates have a shelf life of at least six months, even when stored at 60ºC and exposed to indoor daylight. The shelf life at lower storage temperatures is substantially longer. Similar results are obtained when the foregoing coatings are applied to paper which is not laminated to foam.

The foregoing latexes, with or without the added corrosion inhibitors, have antistatic characteristics so that when coated on substrates they rapidly dissipate any static electrical charge to which they may be exposed. Thus, in accordance with one embodiment of the present invention, a natural rubber latex having about 50% to about 60% non-volatiles by weight and containing 1% KOH by weight of those non-volatiles, has dissolved in it a polyethylene glycol as a humectant in which the KOH is soluble to form a humectant solution not completely miscible with the rubber of the latex. Polyethylene glycols having molecular weights from about 150 to about 800 are suitable humectants. A typical antistatic preparation is:

EXAMPLE 1

To a 50% non-volatiles natural rubber latex containing 1% KOH based on the weight of non-volatiles, is slowly added a mixture of polyethylene glycols ranging in molecular weights from about 300 to about 500, until 10% by weight of the foregoing non-volatiles has been added. The thus-modified latex is then coated on a packaging laminate of 2-millimeter thick foam on 40-pound Kraft paper, to leave after drying a coating weight of about 8 grams per square decimeter.

Sheets of the finished product readily adhere to each other when pressed together with their coatings face-to-face, and a substantial force is needed to then pull them apart. The adhesion fails primarily by tearing apart of the foam. The sheets, before or after adhesion, show a static discharge time of less than 0.4 seconds, and so are acceptable for packaging electronic parts such as circuit boards which are sensitive to static electric fields.

After storage for six months at 60ºC exposed to interior daylight, the sheets show only slight loss of adhesion bonding when pressed together, and still have a static discharge time of less than 0.4 second.

Substituting NaOH for the KOH provides essentially the same results. The same results are obtained from simple foam-free wrapping papers and plastic films that are correspondingly coated.

Volatile corrosion inhibitors can be added to the latexes containing antistatic agents to provide coating compositions that simultaneously have corrosion inhibition, antistatic protection and cohesive-nonadhesive characteristics. A suitable composition of this type is:

EXAMPLE 2

The latex of Example 1 containing KOH and polyethylene glycol, is further modified by adding to it 2-amino-2-methyl-propadiol-1,3 in an amount 1% by weight of the non-volatiles. The resulting composition can be coated on ordinary wrapping paper, or on paper-foam wrapping laminates, or even on transparent flexible polyvinyl chloride films to give cold-sealable packaging materials very suitable for wrapping objects such as electronic components which are sensitive to both corrosion as well as to static electric fields. Dry coating weights of about 6 to about 12 grams per square decimeter are preferred.

Dicyclohexylamine can be substituted for some or all of the 2-amino-2-methyl-propadiol-1,3 in Example 2, but is preferably added as an aqueous dispersion stabilized with polyvinylpyrrolidone or other stabilizer.

Where the cohesive-nonadhesive function is not needed, the latex can be omitted and the volatile corrosion inhibitor merely mixed with the antistatic material to provide an acqueous solution or dispersion suitable for coating on the desired substrate. Thus, any of the quaternary antistatic agents such as those referred to in U.S. Patent No. 4,321,297 can be mixed with a volatile corrosion inhibitor described in that patent or in U.S. Patent Nos. 2,829,080, 2,987,374, 3,836,077, 3,871,823, 4,051,066, 4,130,524, 4,131,583 and 4,290,912. The proportion of antistat to corrosion inhibitor is preferably about 1:1 by weight, but can range from about 1:5 to about 5:1 by weight. The mixture is preferably as concentrated as practical, so that very water-soluble corrosion inhibitors like triazole are particularly helpful. Dicyclohexylamine and other inhibitors that are not very soluble in water are preferably solubilized as with the help of polyvinylpyrrolidone or other dispersing agent. The quaternary antistats also have some dispersing effect.

Preferred coating formulations according to the present invention are:

## EXAMPLE 3

|  | Parts by Weight |
|---|---|
| Natural rubber latex, ammonia stabilized 61% solids by weight | 100.0 |
| 45% KOH solution in water by weight | 1.0 |
| Water | 7.0 |
| Polyvinylpyrrolidone solid | 3.4 |
| 2-amino-2-methyl-propadiol-1,3 | 3.4 |
| Toluene | 1.0 |
| Tetramethyl decynediol | 0.1 |
| 2,5-di(tertiary amyl) hydroquinone | 1.0 |
| Dicyclohexylamine | 3.4 |
| Triton-X-100 | 0.2 |

The KOH solution is first slowly mixed with the latex, the water is mixed with the next two listed ingredients to make an aqueous dispersion which is then slowly added to the latex-KOH mixture, and finally the last five ingredients mixed with each other to form a solution that is then slowly stirred into the mixture of the first five ingredients. The final product is slowly stirred until uniform, and then filtered to remove coagulated rubber, after which it is ready for coating to make a high-quality cold-sealing wrapping laminate that very effectively prevents corrosion of corrodible metal it is wrapped around.

By the inclusion in the formulation of about 6 parts by weight polyethylene glycol having an average molecular weight of about 350, the formulation of Example 3 deposits a coating that is antistatic as well as corrosion-preventing. However, the coating tends to readily block and adhere to the adjacent turn of a roll of coated laminate. The blocking tendency can be reduced or completely eliminated by further adding to the formulation about 10 parts by weight of finely divided filler powder such as calcium silicate, talc, wollastonite or clay.

The foregoing is further illustrated by the following examples:

## EXAMPLE 4

|  | Parts by Weight |
|---|---|
| Natural rubber latex, ammonia stabilized 60% solids by weight | 100.0 |
| Water | 22.8 |
| Xanthan gum | 0.4 |
| 45% KOH solution by weight in water | 1.1 |
| Tetramethyl decynediol | 0.2 |
| Water | 16.7 |
| Polyvinylpyrrolidone | 3.5 |
| PEG 400 | 7.7 |
| 2-amino-2-methyl-1-propanol 95% by weight solution in water | 0.9 |

|  | Parts by Weight |
| --- | --- |
| Sodium di-octyl sulfosuccinate | |
| 40% by weight solution in water | 0.2 |
| Xanthan gum | 0.6 |
| Toluene | 1.0 |
| Tetramethyl decynediol | 0.1 |
| 2,5-di (tertiary amyl) hydroquinone | 1.0 |
| Sorbitol | 3.4 |
| 70% by weight solution in water | |
| Delaminated clay | 22.0 |
| Water | 16.7 |

This formulation is prepared like that of Example 3, avoiding violent stirring or rapid mixing with the latex. The second, third and fourth ingredients are pre-mixed before slowly adding to the latex; the fifth ingredient is then added to the thus-modified latex followed by a pre-mix of all the remaining ingredients. The last pre-mix is preferably prepared by first mixing the last three of the listed ingredients, then adding it to a mixture of the toluene and the two ingredients following it, and finally adding the resulting combination to a mixture of the sixth, seventh, eight, ninth, tenth and eleventh listed ingredients.

Coatings of the Example 4 formulations show very satisfactory antistat characteristics and can be applied over the foam face of foam-paper wrapper laminates, or of foam-aluminium foil-paper laminates, or over plain paper, or foil-paper laminates or polypropylene film. Where the foil is intended to protect wrapped materials from strong electric fields, it is best about 17 to about 25 microns thick.

## EXAMPLE 5

|  | Parts by Weight |
| --- | --- |
| Natural rubber latex, ammonia stabilized | |
| 59% solids | 100.0 |
| PEG 500 | 4.0 |
| Water | 3.8 |
| 45% KOH solution in water by weight | 0.6 |
| Polyvinylpyrrolidone solid | 1.8 |
| Picconol A-600 resin emulsion, 55% solids | 20.0 |
| Toluene | 1.0 |
| Tetramethyl decynediol | 0.1 |
| 2,5-di (tertiary butyl) hydroquinone | 1.0 |

The ingredients are combined in the order listed, except that the last three ingredients are pre-mixed. Coatings formed from this formulation are very good antistat self-sealing. The Picconol resin is a blend of ethylene-vinyl acetate copolymer and an aliphatic petroleum resin and can be replaced by other resins that increase the aggressiveness of the bonding a described, supra.

While closed-cell microcellular polpropylene foam is a highly desirable packaging substrate, particularly when laminated to a paper support, closed-cell microcellular polyethylene foam is also suitable, and can also be laminated to a paper support. Hot melt amorphous polypropylene is a very effective laminant for adhering such polyethylene foam to paper, even when that foam is not treated, as by corona-discharge, to increase its normal poorly adherent nature. However, latex coatings do not adhere well to polyethylene foam unless that foam has its adherent nature increased by corona treatment or the like.

When a quaternary antistatic agent is coated onto a microcellular polypropylene or polyethylene foam, the thus-treated foam will be securely bonded to a paper backing by a lamination operation using the amorphous polypropylene as hot melt laminant. The addition of volatile corrosion inhibitor to the antistat does not detract from such bonding. However, the heat sealing of one sheet of either of such bonded and coated forms to another such sheet, does not result in good foam-to-foam heat-seal bonding.

Acceptable bonding of such sheets is obtained according to the present invention by having the polypropylene or polyethylene microfoams laminated to their paper support with a pressure-sensitive adhesive.

5

**Claims**

1. Natural rubber latex characterised in that there is dissolved therein alkali metal hydroxide in a concentration from about 1/4% to about 2% by weight, and a polyglycol solvent for the alkali metal hydroxide in a concentration of about 1/4% to about 5% by weight.

2. The composition of claim 1 in which a volatile corrosion inhibitor is also incorporated.

3. The composition of claim 2 in which the volatile corrosion inhibitor consists essentially of a mixture of dicyclohexylamine and 2-amino-2-ethyl propadiol-1,3.

4. The composition of claim 3 in which the inhibitor also contains the protective colloid polyvinylpyrrolidone.

**Revendications**

1. Latex de caoutchouc naturel dans lequel est dissous un hydroxyde de métal alcalin en une concentration d'environ 1/4 % à environ 2 % en poids, et un solvant de polyglycol pour l'hydroxyde de métal alcalin en une concentration d'environ 1/4 % à environ 5 % en poids.

2. Composition suivant la revendication 1, caractérisé en ce qu'elle contient également un inhibiteur de corrosion volatil.

3. Composition suivant la revendication 2, caractérisée en ce que l'inhibiteur de corrosion volatil se compose essentiellement d'un mélange de dicyclohexylamine et de 2-amino-2-éthyl-propadiol-1,3.

4. Composition suivant la revendication 3, caractérisée en ce que l'inhibiteur contient également le colloïde de protection polyvinylpyrrolidone.

**Patentansprüche**

1. Natürliche Kautschukmilch, **dadurch gekennzeichnet,** daß in dieser Alkalimetallhydroxid in einer Konzentration von ungefähr 1/4 bis ungefähr 2 Gew.-% und ein Polyglycollösongsmittel für das Alkalimetallhydroxid in einer Konzentration von ungefähr 1/4 bis etwa 5 Gew.-% gelöst sind.

2. Zusammensetzung nach Anspruch 1, bei der auch ein leichtflüchtiger Korrosionsinhibitor eingebracht ist.

3. Zusammensetzung nach Anspruch 2, bei der der leichtflüchtige Korrosionsinhibitor im wesentlichen aus einer Mischung von Dicyclohexylamin und 2-Amino-2-Äthyl-Propadiol 1,3 besteht.

4. Zusammensetzung nach Anspruch 3, bei der der Inhibitor auch das schützende Kolloid Polyvinylpyrrolidon enthält.